Europäisches Patentamt

European Patent Office

Office européen des brevets

(11) Veröffentlichungsnummer: **0 138 127**
**A2**

## (12) EUROPÄISCHE PATENTANMELDUNG

(21) Anmeldenummer: **84111621.3**

(22) Anmeldetag: **28.09.84**

(51) Int. Cl.⁴: **A 01 C 17/00**

(30) Priorität: **18.10.83 DE 3337812**

(43) Veröffentlichungstag der Anmeldung: **24.04.85**
**Patentblatt 85/17**

(84) Benannte Vertragsstaaten: **FR GB NL**

(71) Anmelder: **H. Niemeyer Söhne GmbH & Co. KG,
Heinrich-Niemeyer-Strasse 52, D-4446 Hörstel (DE)**

(72) Erfinder: **Ungruh, Josef, Ing. grad., Birkhahnweg 7,
D-4440 Rheine (DE)**
Erfinder: **Kosel, Hans Dieter, Barbarastrasse 30,
D-4530 Ibbenbüren (DE)**

(74) Vertreter: **Busse & Busse Patentanwälte,
Postfach 1226 Grosshandelsring 6, D-4500 Osnabrück
(DE)**

(54) **Streugerät, insbesondere Düngerstreuer.**

(57) Das Gerät zum Ausstreuen von pulverigem, körnigem und/oder kleinstückigem Streugut, insbesondere Kunstdünger, besteht aus einem an ein Trägerfahrzeug anbaubaren Rahmengestell (1), einem an diesem befestigten Vorratsbehälter (2) für Streugut mit trichterförmig geneigten Seitenwänden (4) und einem horizontalen Boden (5) mit zumindest einer Auslauföffnung (5') für das Streugut. Eine vertikale Rührwerkswelle (6) steht durch den Boden von unten in den Vorratsbehälter (1) vor, die ein im unteren Bereich des Vorratsbehälters (1) umlaufendes Rührwerk (7) abstützt und antreibt. Koaxial zur Rührwerkswelle (6) ist im Abstand unterhalb des Bodens (5) des Vorratsbehälters (1) ein umlaufend angetriebener Schleuderteller (8) angeordnet, und es ist ein mit einem Zapfwellenanschluß versehenes Winkelgetriebe (10) vorgesehen, von dem der Antrieb für das Rührwerk (7) und den Schleuderteller (8) abgeleitet ist. Dabei ist im Antrieb für das Rührwerk (7) und den Schleuderteller (8) eine Verzweigung vorgesehen, und das Rührwerk (7) ist mit einer gegenüber der Drehzahl des Schleudertellers (8) herabgesetzten Drehzahl angetrieben.

- 1 -

DB/Ha

Streugerät, insbesondere Düngerstreuer

Die Erfindung bezieht sich auf ein Gerät zum Ausstreuen von pulverigem, körnigem und/oder kleinstückigem Streugut, insbesondere Kunstdünger, gemäß dem Oberbegriff des Anspruchs 1.

Bei bekannten Geräten dieser Art bildet die Rührwerkswelle zugleich auch die Antriebswelle für den Schleuderteller, der auf der Rührwerkswelle befestigt ist und wie das Rührwerk mit Rührwerkswellendrehzahl umläuft.

Der Erfindung liegt die Aufgabe zugrunde, ein Gerät der eingangs genannten Art zu schaffen, das bei herabgesetztem Leistungsbedarf eine schonende Behandlung des Streugutes im Vorratsbehälter gewährleistet und für einen Betrieb mit unterschiedlichen, insbesondere auch empfindlichen Streugütern geeignet ist. Das Gerät nach der Erfindung löst diese Aufgabe mit den Merkmalen des kennzeichnenden Teils des Anspruchs 1. Hinsichtlich wesentlicher weiterer Ausgestaltungen wird auf die Ansprüche 2 bis 5 verwiesen.

Bei einheitlicher Leistungszuführung zum Gerät über die Zapfwelle eines Trägerfahrzeugs sichert das Gerät nach der Erfindung einen in der Drehzahl unabhängigen Antrieb des Schleudertellers einerseits und des Rührwerks andererseits mit der Folge, daß die Drehzahl des Schleudertellers mit einem Wert vorgegeben werden kann, der den Schleuderfunktionen des Schleudertellers Rechnung trägt, während die Drehzahl des Rührwerks mit einem unabhängigen, verminderten Wert vorgegeben werden kann, der sich lediglich an der Erzielung der

- 2 -

gewünschten Rührwirkung und an den Eigenschaften des jeweils eingesetzten Streugutes orientiert. Hierdurch kann einerseits sichergestellt werden, daß das Rührwerk Klumpen- und Brückenbildungen im Streugut im Vorratsbehälter vermeidet, so daß ein gleichmäßiges Ausrieseln durch die Auslaßöffnung im Boden auf den Streuteller gewährleistet ist, während andererseits vermieden werden kann, daß durch eine zu starke mechanische Einwirkung auf das Streugut dieses unerwünscht zerschlagen oder zermahlen wird mit der Folge, daß sich die vorgegebene Korngröße bzw. Sieblinie verändert und sich Inhomogenitäten einstellen, die sich auch auf die Streufunktion und das Streubild auswirken.

In der Zeichnung sind zwei Ausführungsbeispiele des Gegenstands der Erfindung schematisch näher veranschaulicht. In der Zeichnung zeigen:

Fig. 1       eine schematische Gesamtansicht eines Streugerätes nach der Erfindung,

Fig. 2       einen abgebrochenen vertikalen Querschnitt durch das in Fig. 1 linke Winkelgetriebe, die Rührwerkswelle und den darüber befindlichen Bodenbereich des Vorratsbehälters, und

Fig. 3       eine Schnittdarstellung ähnlich Fig. 2 einer abgewandelten Ausführungsform nach der Erfindung.

Das in der Zeichnung veranschaulichte Gerät bildet einen Düngerstreuer, der in Doppelausführung gestaltet ist. Es umfaßt ein Rahmengestell 1, das an ein nicht dargestelltes Trägerfahrzeug, z.B. die Dreipunkthydraulik eines landwirtschaftlichen Schleppers, anbaubar ist und hierzu geeignete Anschlußmittel aufweist. An dem Rahmengestell 1 ist ein Vorratsbehälter 2 befestigt, der bei dem dargestellten Beispiel einen oberen Öffnungsrand- bereich 3 aufweist, an den sich trichterförmig geneigte Seitenwände 4 anschließen. Bei der dargestellten Doppelausführung bilden die Seitenwände 4 zwei nebeneinanderliegende Trichterbereiche, die jeweils unterseitig durch einen horizontalen

- 3 -

Boden 5 mit zumindest einer Auslauföffnung 5' für das Streugut abgeschlossen sind. Anstelle einer solchen Doppelausführung kann das Gerät auch einen Vorratsbehälter aufweisen, der einen Trichter mit nur einem einzigen Boden 5 bildet, wobei die Form des Trichters im wesentlichen kreiskegel- oder pyramidenstumpfförmig gestaltet ist.

Bei dem dargestellten Beispiel ist jedem Boden 5 eine vertikale, durch den Boden 5 von unten in den zugehörigen Teil des Vorratsbehälters vorstehende Rührwerkswelle 6 zugeordnet, die jeweils ein im unteren zugehörigen Bereich des Vorratsbehälters 2 umlaufendes Rührwerk 7 abstützt und antreibt. Ferner ist koaxial zu jeder Rührwerkswelle 6 im Abstand unterhalb des Bodens 5 des Vorratsbehälters 2 ein umlaufend angetriebener Schleuderteller 8 mit Schleuderflügeln 9 an seiner Oberseite angeordnet. Zum Antrieb jeder Rührwerkswelle 6 ist schließlich je ein Winkelgetriebe 10 vorgesehen, denen bei dem dargestellten Ausführungsbeispiel mit Doppelausführung des Gerätes ein gemeinsamer, nicht näher veranschaulichter Zapfwellenanschluß zugeordnet ist. Der Zapfwellenanschluß bildet dabei die Eingangswelle für ein Zentralgetriebe 11, von dem aus zwei diametrale Wellen 12 zu den Winkelgetrieben 10 führen, welche für diese jeweils die Eingangswelle bilden. Bei Einzelausführung des Gerätes kann die Eingangswelle 12 zum Winkelgetriebe 10 den Zapfwellenanschluß bilden oder umfassen.

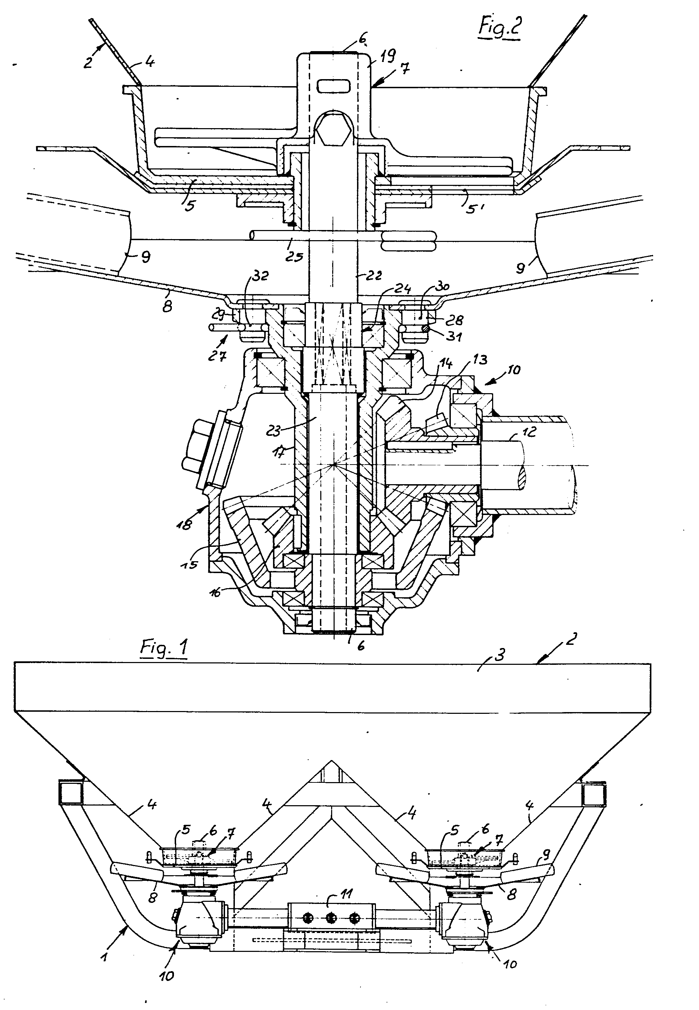

Bei dem Ausführungsbeispiel gemäß Fig. 2 trägt das dort veranschaulichte Winkelgetriebe 10 ebenso wie das in Fig. 1 rechte Winkelgetriebe 10 auf seiner Eingangswelle 12 zwei unterschiedlich bemessene Kegelantriebsräder 13 und 14, von denen das kleinere Kegelantriebsrad 13 mit einem verhältnismäßig großen Kegelabtriebsrad 15 kämmt, das auf dem unteren Ende der Rührwerkswelle 6 befestigt ist. Das größere Kegelantriebsrad 14 kämmt seinerseits mit einem verhältnismäßig kleinen Kegelabtriebsrad 16, das auf einer gesonderten Antriebswelle 17 für den Schleuderteller 8 festgelegt ist. Die Schleudertellerwelle 17 ist dabei als Hohlwelle ausge-

bildet, umgibt die Rührwerkswelle 6 in deren unteren Bereich koaxial im Abstand und ist im Gehäuse 18 des Winkelgetriebes 10 gesondert bzw. unabhängig drehbar gelagert. Die Kegelradpaarungen 13,15 bzw. 14,16 haben Untersetzungsverhältnisse, die der Rührwerkswelle 6 eine niedrigere Drehzahl im Vergleich zur Drehzahl der Schleudertellerwelle 17 vorgeben. So kann z.B. und bevorzugt die Drehzahl der Schleudertellerwelle 17 und damit des Schleudertellers 8 500 Upm und die Drehzahl der Rührwerkswelle 6 und damit des Rührwerks 7 200 Upm betragen.

Bei der Ausführung nach Fig. 2 besteht das Rührwerk beispielsweise aus einem Nabengehäuse 19, an dem diametrale Rührflügel 20,21, die in der Höhe gegeneinander abgestuft sein können, angebracht sind. Die Ausgestaltung des Rührwerks 7 hängt vom Streugut ab, und es besteht ohne weiteres die Möglichkeit, das dargestellte Rührwerk 7 durch ein solches einer anderen Ausbildung zu ersetzen. Hierzu kann die feste Verbindung zwischen der Rührwerkswelle und dem Rührwerk 7 gelöst und das Rührwerk 7 ausgetauscht werden, jedoch besteht auch die Möglichkeit, das Rührwerk 7 mitsamt dem oberen Teil 22 der Rührwerkswelle 6 gemeinschaftlich auszuwechseln. Zu diesem Zweck ist die Rührwerkswelle im Bereich zwischen ihrem Austritt aus dem Gehäuse 18 des Winkelgetriebes 10 und dem Boden 5 des Vorratsbehälters 2 unterteilt, und das obere Wellenteil 22 und das untere Wellenteil 23 sind durch eine axiale Steckkupplung 24 lösbar miteinander verbunden. Ein Querstecker 25 durch den oberen Wellenteil 22 kann dabei sicherstellen, daß dieser sich nicht ungewollt aus der Kupplungsverbindung mit dem unteren Wellenteil 23 lösen kann.

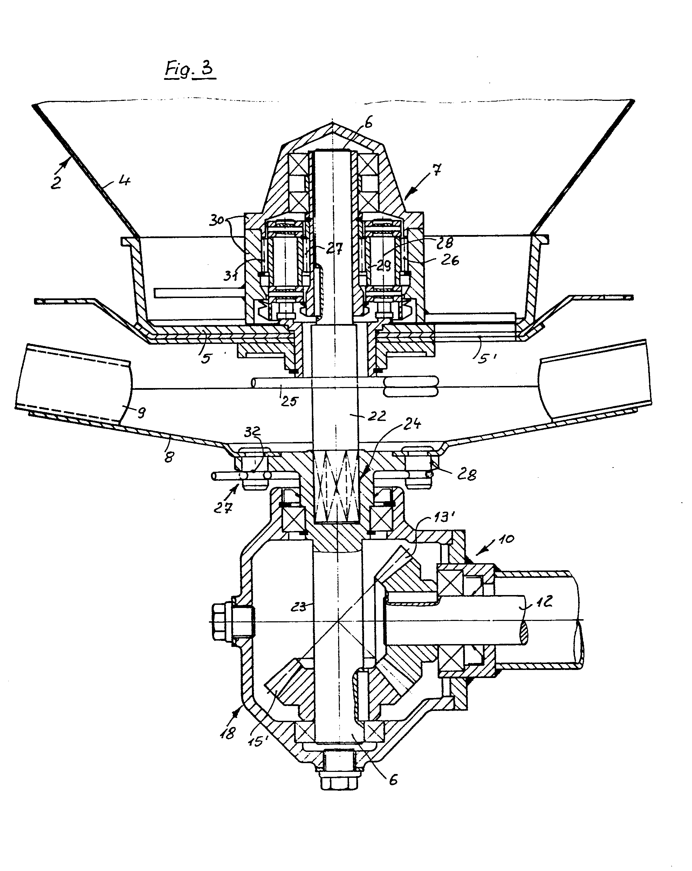

Bei der Ausführung nach Fig. 3 bildet die Rührwerkswelle 6 zugleich die Antriebswelle für den Schleuderteller 8, und zur Herabsetzung der Drehzahl des Rührwerks 7 ist zwischen diesem und dem in den Vorratsbehälter 2 vorstehenden Ende der Rührwerkswelle 6 ein Untersetzungsgetriebe 26 vorgesehen. Dieses Untersetzungsgetriebe 26 ist als Stirnrad-Planeten-

- 5 -

getriebe ausgebildet, bei dem ein Zahnkranz mit Außenverzahnung als Sonnenrad 27 auf der Rührwerkswelle befestigt ist, die Achsen 28 der damit kämmenden Planetenräder 29 relativ zur Rührwerkswelle 6 gegenüber dem Boden 5 des Vorratsbehälters 2 festgelegt sind und ein auf dem Ende der Rührwerkswelle 6 drehbar gelagertes und abgestütztes Nabengehäuse 30 des Rührwerks 7 mit einer Innenverzahnung 31 das mit untersetzter Drehzahl koaxial umlaufende Außenrad des Untersetzungsgetriebes 26 bildet.

Bei einer derartigen Ausführung umfaßt das Winkelgetriebe 10 lediglich eine Kegelradpaarung 13',15', die der Rührwerkswelle 6 beispielsweise eine Drehzahl von 500 Upm vorgibt. Das Untersetzungsverhältnis des Untersetzungsgetriebes 26 sorgt für eine Herabsetzung der Drehzahl des Rührwerks 7 auf z.B. 200 Upm.

Die Rührwerkswelle 6 ist wiederum wie in Fig. 2 unterteilt, und in Abwandlung von der Ausführung nach Fig. 2 ist der Schleuderteller 8 am unteren Wellenteil 23 befestigt.

- 6 -

DB/Ha

Ansprüche:

1. Gerät zum Ausstreuen von pulverigem, körnigem und/oder kleinstückigem Streu-gut, insbesondere Kunstdünger, bestehend aus einem an ein Trägerfahrzeug anbaubaren Rahmengestell, einem an diesem befestigten Vorratsbehälter für Streugut mit trichterförmig geneigten Seitenwänden und einem horizontalen Boden mit zumindest einer Auslauföffnung für das Streugut, einer vertikalen, durch den Boden von unten in den Vorratsbehälter vorstehenden Rührwerkswelle, die ein im unteren Bereich des Vorratsbehälters umlaufendes Rührwerk abstützt und antreibt, einem koaxial zur Rührwerkswelle im Abstand unterhalb des Bodens des Vorratsbehälters angeordneten, umlaufend angetriebenen Schleuderteller und einem mit einem Zapfwellenanschluß versehenen Winkelgetriebe, von dem der Antrieb für das Rührwerk und den Schleuderteller abgeleitet ist, dadurch gekennzeichnet, daß im Antrieb für das Rührwerk (7) und den Schleuderteller (8) eine Verzweigung vorgesehen und das Rührwerk (7) mit einer gegenüber der Drehzahl des Schleudertellers (8) herabgesetzten Drehzahl angetrieben ist.

2. Gerät nach Anspruch 1, dadurch gekennzeichnet, daß das Winkelgetriebe (10) auf seiner über den Zapfwellenanschluß angetriebenen Eingangswelle (12) zwei unterschiedlich bemessene Kegelantriebsräder (13,14) trägt, von denen das eine (13) mit einem Kegelabtriebsrad (15) auf dem unteren Ende der Rührwerkswelle (6) und von denen das andere (14) mit einem Kegelabtriebsrad (16) auf einer gesonderten Schleudertellerwelle (17) kämmt, die als Hohlwelle ausgebildet ist, die Rührwerkswelle in deren unteren Bereich koaxial frei umgibt

- 7 -

und im Gehäuse (18) des Winkelgetriebes gesondert drehbar gelagert ist.

3.   Gerät nach Anspruch 1, dadurch gekennzeichnet, daß zwischen dem oberen Ende der in an sich bekannter Weise zugleich den Schleuderteller (8) als Antriebswelle tragenden Rührwerkswelle (6) und dem Rührwerk (7) ein Untersetzungsgetriebe (26) zwischengeordnet ist.

4.   Gerät nach Anspruch 3, dadurch gekennzeichnet, daß das Untersetzungsgetriebe als Stirnrad-Planetengetriebe (26) ausgebildet ist, bei dem ein Zahnkranz mit Außenverzahnung als Sonnenrad (27) auf der Rührwerkswelle (6) befestigt ist, die Achsen (28) der Planetenräder (29) relativ zur Rührwerkswelle gegenüber dem Boden (5) des Vorratsbehälters (2) festgelegt sind und ein auf dem Ende der Rührwerkswelle drehbar gelagertes und abgestütztes Nabengehäuse (30) des Rührwerks (7) mit einer Innenverzahnung (31) das mit untersetzter Drehzahl koaxial umlaufende Außenrad bildet.

5.   Gerät nach Anspruch 4, dadurch gekennzeichnet, daß die Rührwerkswelle (6) in einem Bereich zwischen ihrem Austritt aus dem Gehäuse (18) des Winkelgetriebes (10) und dem Boden (5) des Vorratsbehälters (2) unterteilt ist und beide Wellenteile (22,23) über eine Steckkupplung (24) lösbar verbunden sind.

0138127

Fig.2

Fig. 1

Fig. 3